# EUROPÄISCHE PATENTSCHRIFT

(11) **EP 4 486 104 B1**
(45) Veröffentlichungstag und Bekanntmachung des Hinweises auf die Patenterteilung: **20.08.2025**
(21) Anmeldenummer: 24707845.4
(22) Anmeldetag: 04.03.2024
(51) Int. Cl.: A01B 15/06, A01B 35/22

(54) **WERKZEUGWECHSELSYSTEM FÜR EINE LANDWIRTSCHAFTLICHE BODENBEARBEITUNGSMASCHINE UND VERFAHREN ZUM BEFESTIGEN EINES BODENBEARBEITUNGSWERKZEUGES**
TOOL CHANGING SYSTEM FOR AN AGRICULTURAL SOIL WORKING MACHINE AND METHOD FOR FIXING A SOIL WORKING TOOL
SYSTÈME DE CHANGEMENT D'OUTIL POUR UNE MACHINE AGRICOLE DE TRAVAIL DU SOL ET PROCÉDÉ DE FIXATION D'UN OUTIL DE TRAVAIL DU SOL

(30) Priorität: 16.03.2023 EP 23401008
(43) Veröffentlichungstag der Anmeldung: 08.01.2025
(73) Patentinhaber: Amazonen-Werke H. Dreyer SE & Co. KG, 49205 Hasbergen (DE)
(72) Erfinder: MAHLER, Tom, 49205 Hasbergen (DE)
(74) Vertreter: Pelster Behrends Patentanwälte PartG mbB
(86) Internationale Anmeldenummer: PCT/EP2024/055548
(87) Internationale Veröffentlichungsnummer: WO 2024/188688

(56) Entgegenhaltungen:
- WO-A1-2022/184284
- DE-C- 849 311
- US-A- 1 306 705

## Beschreibung

Die Erfindung betrifft ein Werkzeugwechselsystem für eine landwirtschaftliche Bodenbearbeitungsmaschine nach dem Oberbegriff des Patentanspruchs 1, eine landwirtschaftliche Bodenbearbeitungsmaschine nach dem Oberbegriff des Patentanspruchs 12 und ein Verfahren zum Befestigen eines Bodenbearbeitungswerkzeugs an einem Werkzeugträger nach dem Oberbegriff des Patentanspruchs 13.

Die Bodenbearbeitungswerkzeuge von landwirtschaftlichen Bodenbearbeitungsmaschinen unterliegen während der Verwendung üblicherweise einem vergleichsweise hohen Verschleiß, sodass diese in der Praxis häufig ausgetauscht werden müssen. Darüber hinaus ist es häufig beabsichtigt, eine landwirtschaftliche Bodenbearbeitungsmaschine mit unterschiedlichen Bodenbearbeitungswerkzeugen zu verwenden, welche auf einen spezifischen Bearbeitungsvorgang, einen spezifischen Bodentyp und/oder auf die Erfordernisse einer spezifischen Kulturpflanze angepasst sind.

In der Praxis werden bereits Werkzeugschnellwechselsysteme eingesetzt, bei welchen das Bodenbearbeitungswerkzeug von einem Werkzeugträger getragen wird. Mittels eines Spannhebels kann das Bodenbearbeitungswerkzeug betriebssicher an dem Werkzeugträger verspannt werden. Ein derartiges System ist beispielsweise aus der Druckschrift WO 2022/184284 A1 bekannt.

Bei den bekannten Systemen stellt die Arretiermechanik des Spannhebels häufig ein Problem dar. Zum Arretieren des Spannhebels werden bisher beispielsweise ringförmige Arretierbügel eingesetzt. Derartige Arretierbügel neigen bei dauerhafter dynamischer Belastung zur Verformung, sodass keine dauerhafte betriebssichere Arretierung gewährleistet werden kann. Ferner sind Halteglieder bekannt, welche an dem Werkzeugträger angeformt sind und eine Rastkante für den Spannhebel bereitstellen. Bei derartigen Arretiermechaniken ist jedoch regelmäßig der Einsatz von Spannwerkzeugen erforderlich, um eine Verrastung des Spannbügels an dem am Werkzeugträger angeformten Halteglied umzusetzen.

Die der Erfindung zugrunde liegende Aufgabe besteht also darin, die Arretierung des Spannhebels bei einem Werkzeugwechselsystem robust gegenüber dynamischer Dauerbelastung zu gestalten, ohne dabei den Handhabungskomfort zu beeinträchtigen.

Die Aufgabe wird durch ein Werkzeugwechselsystem der eingangs genannten Art gelöst, wobei der Sicherungsanschlag der Arretiergliedaufnahme des erfindungsgemäßen Werkzeugwechselsystems in dem Betriebsspannzustand des Spannhebels rückseitig des Spannhebels angeordnet ist.

Dadurch, dass der Sicherungsanschlag in dem Betriebsspannzustand des Spannhebels rückseitig des Spannhebels angeordnet ist, wird das Arretierglied, welches sich zwischen dem Spannhebel und dem Sicherungsanschlag befindet, durch die Rückstellkraft des Spannhebels auf Druck belastet. Auf diese Weise kann auf zugbelastete Arretierglieder, wie beispielsweise Arretierbügel, verzichtet werden. Die Druckbelastung des Arretierglieds erlaubt die Verwendung eines kompakten und gleichzeitig hochbelastbaren Arretierteils und führt somit zu einer erheblich gesteigerten Dauerbelastbarkeit des Arretierglieds, sodass eine deformationsbedingte Beeinträchtigung der Arretierfunktion ausgeschlossen ist. Durch das relativ zum Werkzeugträger bewegbare Arretierglied wird außerdem ein hohes Maß an Handhabungskomfort während des Arretiervorgangs gewährleistet.

Das Bodenbearbeitungswerkzeug kann dazu eingerichtet sein, zur Bodenbearbeitung durch Erdreich bewegt zu werden. Das Bodenbearbeitungswerkzeug kann ein Scharelement oder ein Schneidelement sein, beispielsweise eine Scharplatte oder eine Messerplatte oder ein Hackmesser.

Mittels des Werkzeugwechselsystems kann das Bodenbearbeitungswerkzeug schnell und werkzeuglos gewechselt werden. Das Verbringen des Spannhebels in den Betriebsspannzustand erfolgt vorzugsweise durch die Handkraft eines Bedieners. Das Arretierglied ist vorzugsweise als separates Teil ausgebildet. Das Arretierglied lässt sich vorzugsweise quer durch den Werkzeugträger einschieben. Das Arretierglied verhindert, dass sich der in dem Betriebsspannzustand befindende Spannhebel wieder rückverformen und entspannen kann. Die auf das Arretierglied übertragene Rückstellkraft verspannt auch das Arretierglied, sodass ein seitliches Herausrutschen des Arretierglieds verhindert wird. Das Bodenbearbeitungswerkzeug und der Werkzeugträger sind vorzugsweise spielfrei miteinander verbindbar. Durch die spielfreie Verbindung wird ein unbeabsichtigtes Ausweichen des Bodenbearbeitungswerkzeugs bei einem Kontakt mit einem im Boden befindlichen Körper, beispielsweise einer Wurzel, verhindert, wodurch das Arbeitsergebnis verbessert wird. Insbesondere wird durch die erfindungsgemäße Anordnung ein spielfreier Sitz aufrecht erhalten und/oder Fertigungstoleranzen des Bodenbearbeitungswerkzeuges und/oder Werkzeugträgers ausgeglichen, so dass ferner die Betriebssicherheit gesteigert ist.

In einer bevorzugten Ausführungsform des erfindungsgemäßen Werkzeugwechselsystems wird die Arretiergliedaufnahme durch eine Arretierausnehmung im Werkzeugträger, insbesondere in einem rückseitigen Materialfortsatz des Werkzeugträgers, gebildet. Der rückseitige Materialfortsatz ist vorzugsweise ein Vorsprung, welcher rückseitig herausragt oder übersteht. Der Werkzeugträger weist vorzugsweise einen stielförmigen Trägerkörper auf. Der stielförmige Trägerkörper und der rückseitige Materialfortsatz sind integrale Bestandteile eines einstückigen Körpers, insbesondere eines einstückigen Metallkörpers.

In einer Weiterbildung des erfindungsgemäßen Werkzeugwechselsystems ist die die Arretiergliedaufnahme bildende Arretierausnehmung im Werkzeugträger als ein sich in Querrichtung erstreckendes Durchgangsloch ausgebildet. Das Durchgangsloch ist vorzugsweise rechteckig, wobei in den Ecken des rechteckigen Durchgangslochs fertigungsbedingte Aussparungen vorhanden sein können. Das Durchgangsloch weist vorzugsweise eine oder mehrere plane Innenkonturflächen auf. Der Sicherungsanschlag wird durch eine der Innenkonturflächen des Durchgangslochs gebildet. Durch die plane Innenkonturfläche des Sicherungsanschlags ist ein flächiger Kontakt des Arretierglieds an dem Sicherungsanschlag möglich.

In einer anderen bevorzugten Ausführungsform des erfindungsgemäßen Werkzeugwechselsystems umfasst der Werkzeugträger einen stielförmigen Trägerkörper mit einer zumindest abschnittsweise aufrecht verlaufenden rückseitigen Abschlussfläche oder Abschlusskante, wobei der Sicherungsanschlag durch eine parallel und/oder rückseitig versetzt zu der Abschlussfläche oder Abschlusskante verlaufende Anschlagsfläche oder Anschlagskante gebildet wird. Die rückseitige Abschlussfläche oder Abschlusskante weist vorzugsweise nach hinten, also entgegen der Bearbeitungs- oder Fahrtrichtung. Die Anschlagsfläche oder Anschlagskante weist vorzugsweise nach vorne, also in Bearbeitungs- oder Fahrtrichtung. Die rückseitige Abschlussfläche oder Abschlusskante und die Anschlagsfläche oder Anschlagskante weisen vorzugsweise in entgegengesetzte Richtungen.

In einer vorteilhaften Weiterbildung des erfindungsgemäßen Werkzeugwechselsystems weist das Arretierglied eine seitliche Materialaussparung zum Aufnehmen eines den Sicherungsanschlag tragenden Materialabschnitts während des Einsetzens des Arretiergliedes in die Arretiergliedaufnahme auf. Das Arretierglied wird vorzugsweise durch seitliches Einschieben in die Arretiergliedaufnahme eingesetzt. Das seitliche Einschieben wird durch die Materialaussparung des Arretierglieds ermöglicht.

Es ist darüber hinaus ein erfindungsgemäßes Werkzeugwechselsystem vorteilhaft, bei welchem das Arretierglied rückseitig der Materialaussparung einen Griffbereich zum Halten des Arretierglieds durch einen Bediener aufweist. Somit kann das Arretierglied während des Einsetzens in die Arretiergliedaufnahme sicher vom Bediener gehalten werden. Der Griffbereich kann ferner zum Entnehmen des Arretierglieds aus der Arretiergliedaufnahme von einem Bediener genutzt werden.

In einer weiteren bevorzugten Ausführungsform des erfindungsgemäßen Werkzeugwechselsystems weist das Arretierglied eine frontseitige Kontaktkonturierung auf, deren Form an die Kontur des Spannhebels angepasst ist. Dadurch, dass die Form der frontseitigen Kontaktkonturierung des Arretierglieds an die Kontur des Spannhebels angepasst ist, kann ein sicherer Sitz zwischen Arretierglied und Spannhebel gewährleistet werden. Wenn die Kontur des Spannhebels beispielsweise im Bereich des Arretierglieds eine konvexe, nach außen gewölbte Fläche aufweist, weist die frontseitige Kontaktkonturierung des Arretierglieds eine an die konvexe, nach außen gewölbte Fläche des Spannhebels angepasste konkave, nach innen gewölbte Fläche auf.

In einer weiteren bevorzugten Ausführungsform des erfindungsgemäßen Werkzeugwechselsystems ist der Spannhebel als Federbügel, insbesondere als Drahtbiegeteil, ausgebildet. Der Spannhebel kann in diesem Fall beispielsweise U-förmig ausgebildet sein. Zwei Endabschnitte des Drahts des Drahtbiegeteils können unmittelbar nebeneinanderliegen. Die Form des Spannhebels kann spiegelsymmetrisch in Bezug auf eine Symmetrieebene sein, sodass sie sich beispielsweise durch zwei symmetrisch verlaufende Drahtabschnitte ergibt. Infolge dieser Ausführungsform weist der Spannhebel vorzugsweise eine offene Form auf, sodass das Risiko anhaftenden Bodenmaterials und sich verfangender Pflanzenreste besonders reduziert ist.

In einer anderen bevorzugten Ausführungsform des erfindungsgemäßen Werkzeugwechselsystems läuft der Spannhebel in einem oberen Bereich um einen Freiraum um, durch welchen sich im Betriebsspannzustand des Spannhebels die Arretiergliedaufnahme erstreckt. In dem oberen Bereich kann der Spannhebel beispielsweise eine Schlaufenform aufweisen, wobei der die Arretiergliedaufnahme aufnehmende Freiraum durch die Schlaufenform gebildet wird.

Es ist ferner ein erfindungsgemäßes Werkzeugwechselsystem bevorzugt, bei welchem der Spannhebel einen Trägerkontaktbereich aufweist, welcher im Betriebsspannzustand des Spannhebels gegen einen Hebelführungsbereich des Werkzeugträgers gedrückt wird, wobei der Spannhebel im Trägerkontaktbereich seitlich von Sicherungsflanken des Werkzeugträgers gegen Seitwärtsbewegungen gesichert wird. Der Trägerkontaktbereich und der Hebelführungsbereich bilden gemeinsam ein Drehlager für den Spannhebel, welches eine geführte Drehbewegung des Spannhebels über einen Schwenkwinkelbereich erlaubt. Die Sicherungsflanken dienen als seitliche Anschläge, sodass ein Außerkontaktkommen des Trägerkontaktbereichs des Spannhebels und des Hebelführungsbereichs des Werkzeugträgers durch eine Seitwärtsbewegung von Spannhebel und/oder Werkzeugträger verhindert wird. Der Trägerkontaktbereich des Spannhebels weist vorzugsweise eine konvex gekrümmte Kontaktfläche auf. Der Hebelführungsbereich des Werkzeugträgers weist vorzugsweise eine konkav gekrümmte Kontaktfläche auf.

In einer Weiterbildung des erfindungsgemäßen Werkzeugwechselsystems weist der Spannhebel einen Verriegelungsabschnitt auf, welcher in eine Hebelaufnahmeausnehmung des Bodenbearbeitungswerkzeugs einsetzbar ist. Durch das Einsetzen des Verriegelungsabschnitts des Spannhebels in die Hebelaufnahmeausnehmung des Bodenbearbeitungswerkzeugs wird der Spannhebel in einen Zwischenzustand verbracht. Nach dem Einsetzen des Verriegelungsabschnitts des Spannhebels in die Hebelaufnahmeausnehmung des Bodenbearbeitungswerkzeugs ist ein oberer Bereich des Spannhebels dann in Richtung des Werkzeugträgers zu drücken. Die Hebelaufnahmeausnehmung ist vorzugsweise in einem hinteren Bereich des Bodenbearbeitungswerkzeugs angeordnet. Die Hebelaufnahmeausnehmung ist nach In-Eingriff-Bringen von Bodenbearbeitungswerkzeug und Werkzeugträger von der Hinterseite des Bodenbearbeitungswerkzeugs zugänglich, sodass der Spannhebel in einfacher Weise von hinten-oben einsetzbar ist. Hierdurch ist eine gefahrlose und einfache Montage des Bodenbearbeitungswerkzeugs möglich, da keine Montagevorgänge an der Unterseite des Bodenbearbeitungswerkzeugs ausgeführt werden müssen. Vorzugsweise weist der Werkzeugträger einen oder mehrere Eingriffskörper auf, wobei jeder Eingriffskörper dazu eingerichtet ist, in eine Aufnahmeausnehmung in dem Bodenbearbeitungswerkzeug einzugreifen. Ein Eingriffskörper ist vorzugsweise dazu eingerichtet, in die Hebelaufnahmeausnehmung einzugreifen, in welcher auch der Verriegelungsabschnitt des Spannhebels einsetzbar ist. Die Hebelaufnahmeausnehmung nimmt also sowohl einen Eingriffskörper als auch den Verriegelungsabschnitt des Spannhebels auf. Der zumindest eine Eingriffskörper und die zumindest eine Hebelaufnahmeausnehmung weisen vorzugsweise korrespondierende Abfasungen, insbesondere im Bereich zwischen 30 und 60 Grad, besonders vorzugsweise 45 Grad, auf, wobei dadurch infolge der erfindungsgemäßen Anordnung auch bei auftretendem Verschleiß ein zumindest annährend spielfreier Sitz gewährleistet ist, weil sich das Bodenbearbeitungswerkzeug, der Werkzeugträger und der Spannhebel gegenseitig nachstellen.

Die der Erfindung zugrunde liegende Aufgabe wird ferner durch eine landwirtschaftliche Bodenbearbeitungsmaschine der eingangs genannten Art gelöst, wobei das Werkzeugwechselsystem der erfindungsgemäßen Bodenbearbeitungsmaschine nach einer der vorstehend beschriebenen Ausführungsformen ausgebildet ist. Die landwirtschaftliche Bodenbearbeitungsmaschine ist vorzugsweise eine Hackmaschine.

Die der Erfindung zugrunde liegende Aufgabe wird ferner durch ein Verfahren der eingangs genannten Art gelöst, wobei das Arretierglied in der Arretierposition von dem sich in dem Betriebsspannzustand befindenden Spannhebel auf Druck belastet wird. Dadurch, dass das Arretierglied in der Arretierposition auf Druck belastet wird, ergibt sich eine erheblich gesteigerte Dauerbelastbarkeit und somit eine erhöhte Lebensdauer. Ferner kann die Druckkraft als Nachstellkraft genutzt werden bei auftretendem Verschleiß am Bodenbearbeitungswerkzeug und/oder Werkzeugträger, so dass auch dann noch eine zumindest annährend spielfreie Verriegelung, insbesondere selbsttätig, erreicht wird.

Das erfindungsgemäße Verfahren wird ferner dadurch vorteilhaft weitergebildet, dass das Bodenbearbeitungswerkzeug, der Werkzeugträger, der Spannhebel und das Arretierglied ein Werkzeugwechselsystem nach einer der vorstehend beschriebenen Ausführungsformen bilden. Hinsichtlich der Vorteile und Modifikationen des erfindungsgemäßen Verfahrens wird somit auf die Vorteile und Modifikationen des erfindungsgemäßen Werkzeugwechselsystems verwiesen.

Nachfolgend werden bevorzugte Ausführungsformen der Erfindung unter Bezugnahme auf die beiliegenden Zeichnungen näher erläutert und beschrieben. Dabei zeigen:
- Fig. 1: ein erfindungsgemäßes Werkzeugwechselsystem in einer schematischen Explosionsdarstellung;
- Fig. 2: den Werkzeugträger des in der Fig. 1 abgebildeten Werkzeugwechselsystems in einer schematischen Perspektivdarstellung;
- Fig. 3: den Spannhebel des in der Fig. 1 abgebildeten Werkzeugwechselsystems in einer schematischen Perspektivdarstellung;
- Fig. 4: das Arretierglied des in der Fig. 1 abgebildeten Werkzeugwechselsystems in einer schematischen Perspektivdarstellung;
- Fig. 5: ein erfindungsgemäßes Werkzeugwechselsystem nach dem Einsetzen des Spannhebels in die Hebelaufnahmeausnehmung des Bodenbearbeitungswerkzeugs in einer schematischen Perspektivdarstellung;
- Fig. 6: das in der Fig. 5 abgebildete Werkzeugwechselsystem mit an den Werkzeugträger gedrücktem Spannhebel in einer schematischen Perspektivdarstellung;
- Fig. 7: das in der Fig. 5 abgebildete Werkzeugwechselsystem mit manuell fixiertem Spannhebel und nicht-eingesetztem Arretierglied in einer schematischen Perspektivdarstellung;
- Fig. 8: das in der Fig. 5 abgebildete Werkzeugwechselsystem mit manuell fixiertem Spannhebel und in die Arretiergliedaufnahme eingesetztem Arretierglied in einer schematischen Perspektivdarstellung;
- Fig. 9: eine Detaildarstellung im Bereich der Arretiergliedaufnahme in dem in der Fig. 8 abgebildeten Zustand des Werkzeugwechselsystems;
- Fig. 10: den in der Fig. 9 abgebildeten Bereich der Arretiergliedaufnahme nach dem Aufheben der manuellen Spannhebelfixierung;
- Fig. 11: eine Gesamtdarstellung des in der Fig. 10 ausschnittsweise abgebildeten Werkzeugwechselsystems;
- Fig. 12: ein erfindungsgemäßes Werkzeugwechselsystem in einer schematischen Perspektivdarstellung von hinten; und
- Fig. 13: das Bodenbearbeitungswerkzeug und den Werkzeugträger des in der Fig. 12 abgebildeten Werkzeugwechselsystems in einer schematischen Perspektivdarstellung von hinten.

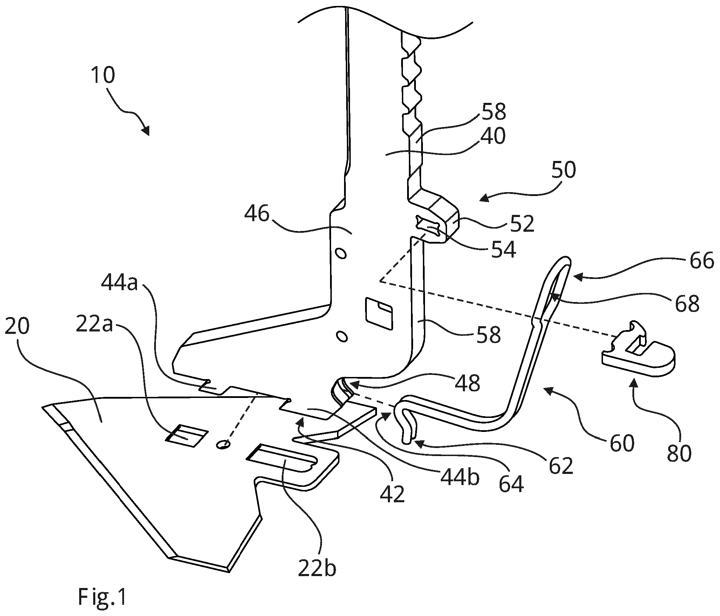

Die Fig. 1 zeigt ein Werkzeugwechselsystem 10 für eine landwirtschaftliche Bodenbearbeitungsmaschine, nämlich für eine Hackmaschine.

Das Werkzeugwechselsystem 10 umfasst ein Bodenbearbeitungswerkzeug 20, einen Werkzeugträger 40, einen Spannhebel 60 und ein Arretierglied 80. Das Bodenbearbeitungswerkzeug 20 ist eine Messerplatte und weist eine pfeilförmige, auch Gänsefuß genannte, Grundform auf. Das Bodenbearbeitungswerkzeug 20 weist zwei in Bearbeitungsrichtung hintereinander angeordnete Aufnahmeausnehmungen 22a, 22b auf. Die Aufnahmeausnehmungen 22a, 22b des Bodenbearbeitungswerkzeugs 20 können mit Eingriffskörpern 44a, 44b des Werkzeugträgers 40 in Eingriff gebracht werden. Die Eingriffskörper 44a, 44b befinden sich an einem unterseitigen Eingriffsabschnitt 42 des Werkzeugträgers 40. Der Eingriffskörper 44a ist in die Aufnahmeausnehmung 22a einsetzbar. Der Eingriffskörper 44b ist in die Aufnahmeausnehmung 22b einsetzbar. Der Werkzeugträger 40 weist einen stielförmigen Trägerkörper 46 auf, von welchem rückseitig ein Materialfortsatz 52 absteht. In dem Materialfortsatz 52 befindet sich eine Arretierausnehmung 54.

Der Spannhebel 60 ist als Drahtbiegeteil ausgebildet und weist an seinem unteren Ende einen Verriegelungsabschnitt 62 auf. Der Verriegelungsabschnitt 62 kann hinter den Eingriffskörper 44b in die Aufnahmeausnehmung 22b eingesetzt werden. Ein Trägerkontaktbereich 64 des Spannhebels 60 kann durch Drücken des Spannhebels 60 in Richtung des Werkzeugträgers 40 mit einem Hebelführungsbereich 48 des Werkzeugträgers 40 in Kontakt gebracht werden. Der Trägerkontaktbereich 64 und der Hebelführungsbereich 48 bilden gemeinsam ein Drehlager für den Spannhebel 60, welches eine geführte Drehbewegung des Spannhebels 60 über einen Schwenkwinkelbereich erlaubt. Der Spannhebel 60 verläuft rückseitig des Werkzeugträgers 40 und dient zum betriebssicheren Verspannen des Bodenbearbeitungswerkzeugs 20 an dem Werkzeugträger 40.

Der Spannhebel 60 weist in einem oberen Bereich 66 einen Freiraum 68 auf, welcher zum Aufnehmen des Materialfortsatzes 52 des Werkzeugträgers 40 dient. Wenn der Spannhebel 60 an der oberhalb des Materialfortsatzes 52 verlaufenden rückseitigen Abschlussfläche 58 des Werkzeugträgers 40 anliegt, kann das Arretierglied 80 in die Arretierausnehmung 54 eingesetzt werden. Der Materialfortsatz 52 mit der Arretierausnehmung 54 dient also als Arretiergliedaufnahme 50. Das Arretierglied 80 ist als separates Teil ausgebildet und somit relativ zu dem Werkzeugträger 40 bewegbar. Nach Einsetzen des Arretierglieds 80 in die Arretierausnehmung 54 dient das Arretierglied 80 zum Arretieren des Spannhebels 60 in einem Betriebsspannzustand.

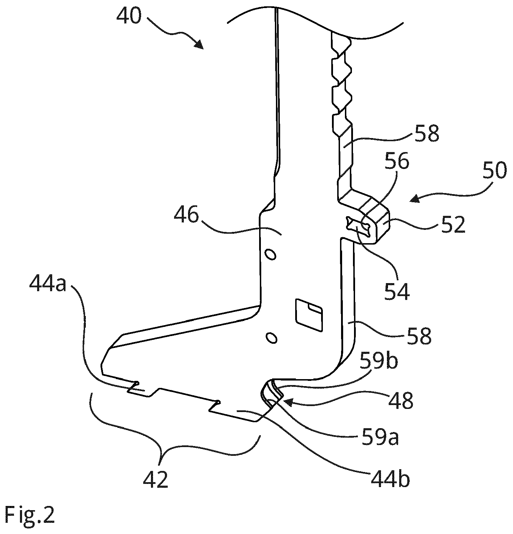

Die Fig. 2 zeigt den Werkzeugträger 40 des in der Fig. 1 dargestellten Werkzeugwechselsystems 10. Der Werkzeugträger 40 weist an seiner Unterseite einen Eingriffsabschnitt 42 mit zwei voneinander beabstandeten Eingriffskörpern 44a, 44b auf. Ferner umfasst der Werkzeugträger 40 einen stielförmigen Trägerkörper 46 mit rückseitigen Abschlussflächen 58. Auf der Rückseite befindet sich in einem unteren Abschnitt ein Hebelführungsbereich 48 zur Führung des Spannhebels 60. Seitlich des Hebelführungsbereichs 48 verlaufen Sicherungsflanken 59a, 59b, welche Seitwärtsbewegungen des Spannhebels 60 verhindern.

Ferner umfasst der Werkzeugträger 40 eine Arretiergliedaufnahme 50 zum Aufnehmen des Arretierglieds 80. Die Arretiergliedaufnahme 50 weist einen Sicherungsanschlag 56 zum Aufnehmen einer von dem sich in dem Betriebsspannzustand befindenden Spannhebel 60 auf das Arretierglied 80 übertragenen Rückstellkraft auf. Die Arretiergliedaufnahme 50 wird durch eine Arretierausnehmung 54 in einem rückseitigen Materialfortsatz 52 des Werkzeugträgers 40 gebildet. Der rückseitige Materialfortsatz 52 ist ein Vorsprung, welcher rückseitig herausragt beziehungsweise übersteht. Die die Arretiergliedaufnahme 50 bildende Arretierausnehmung 54 im Werkzeugträger 40 ist als ein sich in Querrichtung erstreckendes Durchgangsloch ausgebildet. Das Durchgangsloch weist einen rechteckigen Querschnitt auf, wobei in den Ecken fertigungsbedingte Aussparungen vorhanden sind. Das Durchgangsloch weist plane Innenkonturflächen auf. Der Sicherungsanschlag 56 wird durch die rückseitige Innenkonturfläche des Durchgangslochs gebildet und ist in dem Betriebsspannzustand des Spannhebels 60 rückseitig des Spannhebels 60 angeordnet.

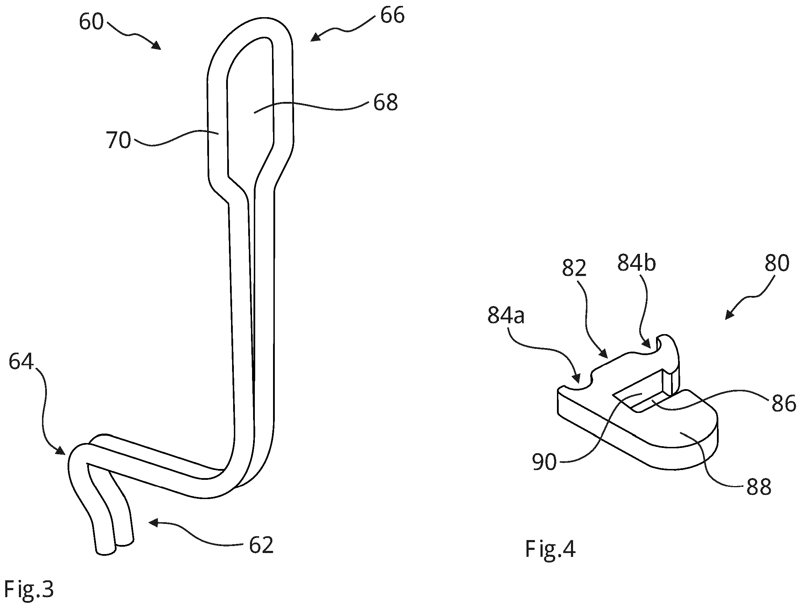

Die Fig. 3 zeigt den als Drahtbiegeteil ausgebildeten Spannhebel 60. Der Spannhebel 60 ist ein U-förmiger Federbügel und weist eine offene Form auf. Die Form des Spannhebels 60 ist spiegelsymmetrisch in Bezug auf eine mittig verlaufende Symmetrieebene. Der Spannhebel 60 weist in einem oberen Bereich 66 einen Freiraum 68 auf, durch welchen sich im Betriebsspannzustand des Spannhebels 60 die Arretiergliedaufnahme 50 erstreckt. Im oberen Bereich 66 weist der Spannhebel eine Schlaufe 70 auf, durch welche der Freiraum 68 gebildet wird.

Die Fig. 4 zeigt das Arretierglied 80. Das Arretierglied 80 weist eine frontseitige Kontaktkonturierung 82 auf, deren Form an die Kontur des Spannhebels 60 angepasst ist. Die frontseitige Kontaktkonturierung 82 des Arretierglieds 80 weist zwei an die konvexen, nach außen gewölbten Flächen des Spannhebeldrahts angepasste konkave, nach innen gewölbte Flächen 84a, 84b auf. Ferner umfasst das Arretierglied 80 eine seitliche Materialaussparung 86 zum Aufnehmen eines den Sicherungsanschlag 56 tragenden Materialabschnitts des Werkzeugträgers 40. Durch die Materialaussparung 86 wird eine Anschlagsfläche 90 gebildet, welche mit dem Sicherungsanschlag 56 in Kontakt bringbar ist. Außerdem weist das Arretierglied 80 rückseitig der Materialaussparung 86 einen Griffbereich 88 zum Halten des Arretierglieds 80 durch einen Bediener auf.

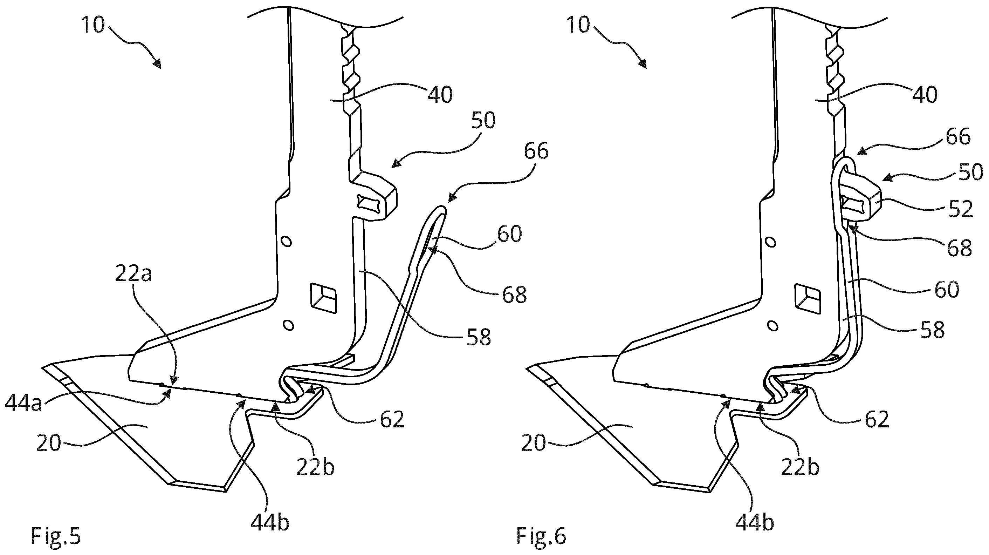

Die Fig. 5 bis 11 zeigen ein Werkzeugwechselsystem 10 während des Befestigens eines Bodenbearbeitungswerkzeugs 20 an einem Werkzeugträger 40.

Wie in der Fig. 5 dargestellt, wird zunächst ein Bodenbearbeitungswerkzeug 20 an einem Werkzeugaufnahmebereich des Werkzeugträgers 40 angeordnet. Nach dem Anordnen des Bodenbearbeitungswerkzeugs 20 an dem Werkzeugträger 40 erstreckt sich ein Eingriffskörper 44a des Werkzeugträgers 40 durch eine Aufnahmeausnehmung 22a des Bodenbearbeitungswerkzeugs 20 und ein Eingriffskörper 44b des Werkzeugträgers 40 erstreckt sich durch die Aufnahmeausnehmung 22b des Bodenbearbeitungswerkzeugs 20. Anschließend wird der Spannhebel 60 in das Bodenbearbeitungswerkzeug 20 eingesetzt. Hierbei wird ein Verriegelungsabschnitt 62 des Spannhebels 60 in die Aufnahmeausnehmung 22b eingesetzt, in welcher sich bereits der Eingriffskörper 44b des Werkzeugträgers 40 befindet.

Wie in der Fig. 6 dargestellt, wird der Spannhebel 60 dann in Richtung des Werkzeugträgers 40 gedrückt, sodass sich der Materialfortsatz 52 des Werkzeugträgers 40 durch den Freiraum 68 im oberen Bereich 66 des Spannhebels 60 erstreckt.

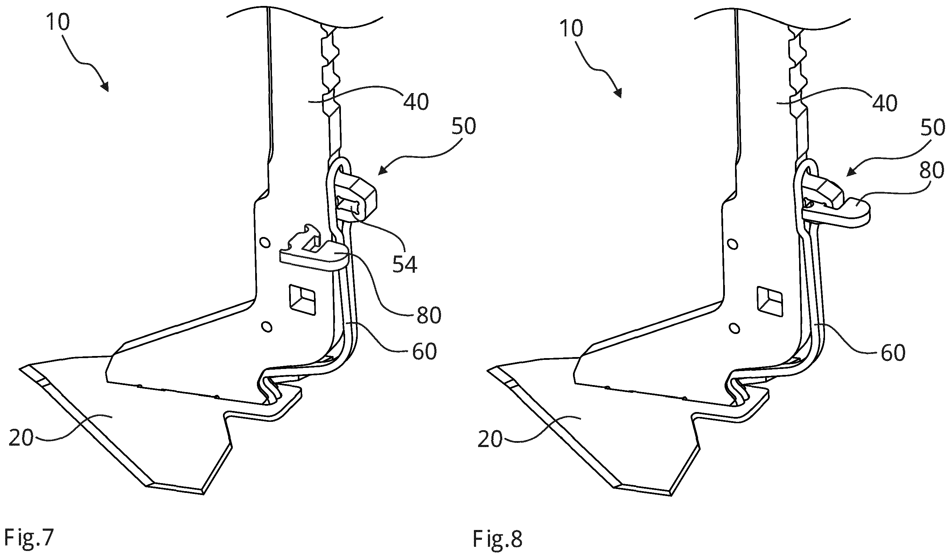

Wie in der Fig. 7 dargestellt, wird der Spannhebel 60 nun in diesem Kontaktzustand manuell fixiert, sodass das Arretierglied 80 in die Arretierausnehmung 54 eingesetzt werden kann.

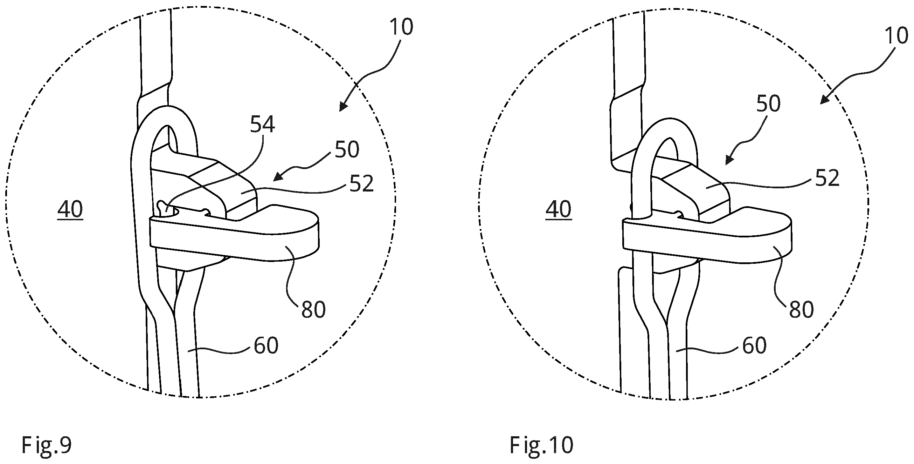

Die Fig. 8 und 9 zeigen einen Zustand, bei welchem das Arretierglied 80 in die Arretierausnehmung 54 im Materialfortsatz 52 eingesetzt ist. In diesem Zustand wird der Spannhebel 60 noch manuell an dem Werkzeugträger 40 fixiert, sodass kein Kontakt zwischen dem Arretierglied 80 und dem Spannhebel 60 vorliegt.

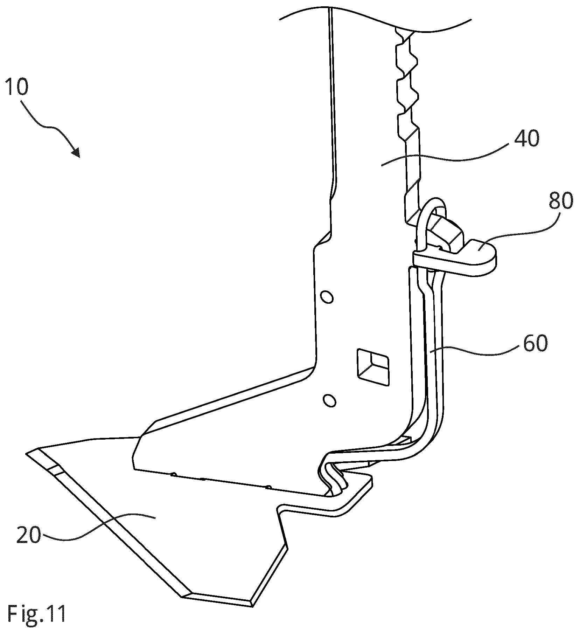

Die Fig. 10 und 11 zeigen das Werkzeugwechselsystem 10, nachdem die manuelle Fixierung des Spannhebels 60 aufgelöst wurde und der Spannhebel rückstellkraftbedingt das Arretierglied 80 gegen einen Sicherungsanschlag 56 der Arretiergliedaufnahme 50 drückt. Das Arretierglied 80 befindet sich nun in der Arretierposition, wobei der Spannhebel 60 von dem sich in der Arretierposition befindenden Arretierglied 80 in einer Betriebsspannposition arretiert wird. Das Arretierglied 80 wird durch die Rückstellkraft des Spannhebels 60 auf Druck belastet. Durch die auf das Arretierglied 80 übertragene Rückstellkraft des Spannhebels 60 wird auch das Arretierglied 80 selbst so verspannt, dass ein seitliches Herausrutschen des Arretierglieds 80 verhindert wird.

Zum Lösen des Bodenbearbeitungswerkzeugs 20 von dem Werkzeugträger 40 ist der Spannhebel 60 wieder manuell in Richtung des Werkzeugträgers 40 zu drücken, sodass das Arretierglied 80 aus der Arretiergliedaufnahme 50 entnommen werden kann. Nach Entnahme des Arretierglieds 80 aus der Arretiergliedaufnahme 50 wird die Rückstellbewegung des Spannhebels 60 nicht länger blockiert, sodass die zur Verspannung führende Verformung des Spannhebels 60 aufgelöst werden kann. Der spannungsfreie Spannhebel 60 kann dann wieder aus der Aufnahmeausnehmung 22b des Bodenbearbeitungswerkzeugs 20 herausgenommen werden, wodurch das Bodenbearbeitungswerkzeug 20 vom Werkzeugträger 40 gelöst werden kann.

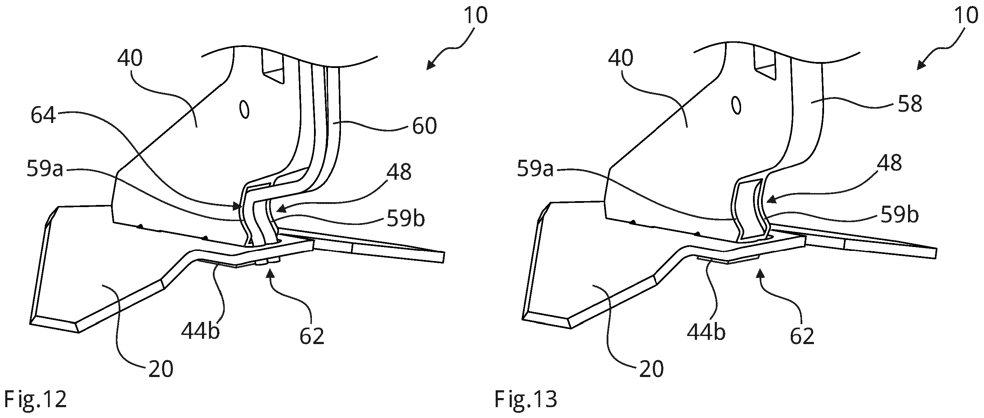

Die Fig. 12 und 13 zeigen, dass der Spannhebel 60 einen Trägerkontaktbereich 64 aufweist, welcher im Betriebsspannzustand des Spannhebels 60 gegen einen Hebelführungsbereich 48 des Werkzeugträgers 40 gedrückt wird, wobei der Spannhebel 60 im Trägerkontaktbereich 64 seitlich von Sicherungsflanken 59a, 59b des Werkzeugträgers 40 gegen Seitwärtsbewegungen gesichert wird. Der Trägerkontaktbereich 64 und der Hebelführungsbereich 48 bilden gemeinsam ein Drehlager für den Spannhebel 60, welches eine geführte Drehbewegung des Spannhebels 60 über einen Schwenkwinkelbereich erlaubt. Der Trägerkontaktbereich des Spannhebels 60 weist eine konvex gekrümmte Kontaktfläche auf. Der Hebelführungsbereich 48 des Werkzeugträgers 40 weist eine konkav gekrümmte Kontaktfläche auf.

### Bezugszeichen

- 10: Werkzeugwechselsystem

- 20: Bodenbearbeitungswerkzeug
- 22a, 22b: Aufnahmeausnehmungen

- 40: Werkzeugträger
- 42: Eingriffsabschnitt
- 44a, 44b: Eingriffskörper
- 46: stielförmiger Trägerkörper
- 48: Hebelführungsbereich
- 50: Arretiergliedaufnahme
- 52: Materialfortsatz
- 54: Arretierausnehmung
- 56: Sicherungsanschlag
- 58: Abschlussflächen
- 59a, 59b: Sicherungsflanken

- 60: Spannhebel
- 62: Verriegelungsabschnitt
- 64: Trägerkontaktbereich
- 66: oberer Bereich
- 68: Freiraum
- 70: Schlaufe

- 80: Arretierglied
- 82: Kontaktkonturierung
- 84a, 84b: nach innen gewölbte Fläche
- 86: Materialaussparung
- 88: Griffbereich
- 90: Anschlagsfläche

## Patentansprüche

1. Werkzeugwechselsystem (10) für eine landwirtschaftliche Bodenbearbeitungsmaschine, mit
- einem Bodenbearbeitungswerkzeug (20);
- einem Werkzeugträger (40) zum Tragen des Bodenbearbeitungswerkzeugs (20);
- einem Spannhebel (60), welcher durch elastische Verformung in einen Betriebsspannzustand verbringbar ist, in welchem der Spannhebel (60) zumindest abschnittsweise rückseitig des Werkzeugträgers verläuft und in welchem der Spannhebel (60) das Bodenbearbeitungswerkzeug (20) betriebssicher an dem Werkzeugträger (40) verspannt; und
- einem Arretierglied (80), welches relativ zu dem Werkzeugträger (40) bewegbar und dazu eingerichtet ist, in einer Arretierposition den Spannhebel (60) in dem Betriebsspannzustand zu arretieren;
wobei der Werkzeugträger (40) eine Arretiergliedaufnahme (50) zum Aufnehmen des Arretierglieds (80) umfasst und die Arretiergliedaufnahme (50) einen Sicherungsanschlag (56) zum Aufnehmen einer von dem sich in dem Betriebsspannzustand befindenden Spannhebel (60) auf das Arretierglied (80) übertragenden Rückstellkraft aufweist,
**dadurch gekennzeichnet, dass** der Sicherungsanschlag (56) in dem Betriebsspannzustand des Spannhebels (60) rückseitig des Spannhebels (60) angeordnet ist.

2. Werkzeugwechselsystem (10) nach Anspruch 1,
**dadurch gekennzeichnet, dass** die Arretiergliedaufnahme (50) durch eine Arretierausnehmung (54) im Werkzeugträger (40), insbesondere in einem rückseitigen Materialfortsatz (52) des Werkzeugträgers, gebildet wird.

3. Werkzeugwechselsystem (10) nach Anspruch 2,
**dadurch gekennzeichnet, dass** die die Arretiergliedaufnahme (50) bildende Arretierausnehmung (54) im Werkzeugträger (40) als ein sich in Querrichtung erstreckendes Durchgangsloch ausgebildet ist.

4. Werkzeugwechselsystem (10) nach einem der vorstehenden Ansprüche,
**dadurch gekennzeichnet, dass** der Werkzeugträger (40) einen stielförmigen Trägerkörper (46) mit einer zumindest abschnittsweise aufrecht verlaufenden rückseitigen Abschlussfläche (58) oder Abschlusskante umfasst, wobei der Sicherungsanschlag (56) durch eine parallel und/oder rückseitig versetzt zu der Abschlussfläche (58) oder Abschlusskante verlaufende Anschlagsfläche oder Anschlagskante gebildet wird.

5. Werkzeugwechselsystem (10) nach einem der vorstehenden Ansprüche,
**dadurch gekennzeichnet, dass** das Arretierglied (80) eine seitliche Materialaussparung (86) zum Aufnehmen eines den Sicherungsanschlag (56) tragenden Materialabschnitts während des Einsetzens des Arretierglieds (80) in die Arretiergliedaufnahme (50) aufweist.

6. Werkzeugwechselsystem (10) nach Anspruch 5,
**dadurch gekennzeichnet, dass** das Arretierglied (80) rückseitig der Materialaussparung (86) einen Griffbereich (88) zum Halten des Arretierglieds (80) durch einen Bediener aufweist.

7. Werkzeugwechselsystem (10) nach einem der vorstehenden Ansprüche,
**dadurch gekennzeichnet, dass** das Arretierglied (80) eine frontseitige Kontaktkonturierung (82) aufweist, deren Form an die Kontur des Spannhebels (60) angepasst ist.

8. Werkzeugwechselsystem (10) nach einem der vorstehenden Ansprüche,
**dadurch gekennzeichnet, dass** der Spannhebel (60) als Federbügel, insbesondere als Drahtbiegeteil, ausgeführt ist.

9. Werkzeugwechselsystem (10) nach einem der vorstehenden Ansprüche,
**dadurch gekennzeichnet, dass** der Spannhebel (60) in einem oberen Bereich (66) um einen Freiraum (68) umläuft, durch welchen sich im Betriebsspannzustand des Spannhebels (60) die Arretiergliedaufnahme (50) erstreckt.

10. Werkzeugwechselsystem (10) nach einem der vorstehenden Ansprüche,
**dadurch gekennzeichnet, dass** der Spannhebel (60) einen Trägerkontaktbereich (64) aufweist, welcher im Betriebsspannzustand des Spannhebels (60) gegen einen Hebelführungsbereich (48) des Werkzeugträgers (40) gedrückt wird, wobei der Spannhebel (60) im Trägerkontaktbereich (64) seitlich von Sicherungsflanken (59a, 59b) des Werkzeugträgers (40) gegen Seitwärtsbewegungen gesichert wird.

11. Werkzeugwechselsystem (10) nach einem der vorstehenden Ansprüche,
**dadurch gekennzeichnet, dass** der Spannhebel (60) einen Verriegelungsabschnitt (62) aufweist, welcher in eine Hebelaufnahmeausnehmung (22b) des Bodenbearbeitungswerkzeugs (20) einsetzbar ist.

12. Landwirtschaftliche Bodenbearbeitungsmaschine, mit
- einem Werkzeugwechselsystem (10),
**dadurch gekennzeichnet, dass** das Werkzeugwechselsystem (10) nach einem der vorstehenden Ansprüche ausgebildet ist.

13. Verfahren zum Befestigen eines Bodenbearbeitungswerkzeugs (20) an einem Werkzeugträger (40) mittels eines Spannhebels (60) und eines Arretierglieds (80), mit den Schritten:
- Anordnen des Bodenbearbeitungswerkzeugs (20) an einem Werkzeugaufnahmebereich des Werkzeugträgers (40);
- Einsetzen des Spannhebels (60) in eine Aufnahmeausnehmung (22b) des Bodenbearbeitungswerkzeugs (20), sodass der Spannhebel (60) zumindest abschnittsweise rückseitig des Werkzeugträgers (40) verläuft;
- Verbringen des Spannhebels (60) in einen Betriebsspannzustand durch Drücken des Spannhebels (60) in Richtung des Werkzeugträgers (40), wobei der Spannhebel (60) beim Verbringen in den Betriebsspannzustand eine elastische Verformung erfährt und der Spannhebel (60) das Bodenbearbeitungswerkzeug (20) im Betriebsspannzustand betriebssicher an dem Werkzeugträger (40) verspannt; und
- Verbringen des Arretierglieds (80) in eine Arretierposition durch Bewegen des Arretierglieds (80) relativ zu dem Werkzeugträger (40), wobei der Spannhebel (60) von dem sich in der Arretierposition befindenden Arretierglied (80) in dem Betriebsspannzustand arretiert wird;
wobei das Arretierglied (80) beim Verbringen in die Arretierposition in eine Arretiergliedaufnahme (50) eingesetzt wird und die Arretiergliedaufnahme (50) einen Sicherungsanschlag (56) zum Aufnehmen einer von dem sich in dem Betriebsspannzustand befindenden Spannhebel (60) auf das Arretierglied (80) übertragenden Rückstellkraft aufweist,
**dadurch gekennzeichnet, dass** das Arretierglied (80) in der Arretierposition von dem sich in dem Betriebsspannzustand befindenden Spannhebel (60) auf Druck belastet wird.

14. Verfahren nach Anspruch 13,
**dadurch gekennzeichnet, dass** das Bodenbearbeitungswerkzeug (20), der Werkzeugträger (40), der Spannhebel (60) und das Arretierglied (80) ein Werkzeugwechselsystem (10) nach einem der Ansprüche 1 bis 11 bilden.

## Claims

1. Tool-changing system (10) for an agricultural soil-working machine, with
- a soil-working tool (20);
- a tool carrier (40) for carrying the soil-working tool (20);
- a tension lever (60) which can be brought into an operational tension state by elastic deformation, in which the tension lever (60) extends at least in sections to the rear of the tool carrier and in which the tension lever (60) tenses the soil-working tool (20) to the tool carrier (40) in an operationally reliable manner; and
- a locking member (80), which is movable relative to the tool carrier (40) and is designed to lock the tension lever (60) in the operational tension state in a locking position;
wherein the tool carrier (40) comprises a locking member intake (50) for receiving the locking member (80) and the locking member intake (50) has a securing stop (56) for receiving a restoring force transmitted to the locking member (80) by the tension lever (60) which is in the operational tension state,
**characterized in that** the securing stop (56) is arranged rear to the tension lever (60) in the operational tension state of the tension lever (60).

2. Tool-changing system (10) according to claim 1,
**characterized in that** the locking member intake (50) is formed by a locking recess (54) in the tool carrier (40), in particular in a rear material extension (52) of the tool carrier.

3. Tool-changing system (10) according to claim 2,
**characterized in that** the locking recess (54) in the tool carrier (40) forming the locking member intake (50) is designed as a through-hole extending in the transverse direction.

4. Tool-changing system (10) according to one of the preceding claims,
**characterized in that** the tool carrier (40) comprises a stalk-shaped carrier body (46) with a rear end surface (58) or end edge extending upright at least in sections, wherein the securing stop (56) is formed by a stop surface or stop edge extending parallel and/or offset to the rear relative to the end surface (58) or end edge.

5. Tool-changing system (10) according to one of the preceding claims,
**characterized in that** the locking member (80) has a lateral material recess (86) for receiving a material section carrying the securing stop (56) during the insertion of the locking member (80) into the locking member intake (50).

6. Tool-changing system (10) according to claim 5,
**characterized in that** the locking member (80) has a grip area (88) on the rear side of the material recess (86) for holding the locking member (80) by an operator.

7. Tool-changing system (10) according to one of the preceding claims,
**characterized in that** the locking member (80) has a front contact contouring (82), the shape of which is adapted to the contour of the tension lever (60).

8. Tool-changing system (10) according to one of the preceding claims,
**characterized in that** the tension lever (60) is designed as a spring clip, in particular as a bent wire part.

9. Tool-changing system (10) according to one of the preceding claims,
**characterized in that** the tension lever (60) is in an upper area (66) circumferential around a free space (68), through which the locking member intake (50) extends in the operational tension state of the tension lever (60).

10. Tool-changing system (10) according to one of the preceding claims,
**characterized in that** the tension lever (60) has a carrier contact area (64) which, in the operational tension state of the tension lever (60), is pressed against a lever guide area (48) of the tool carrier (40), the tension lever (60) in the carrier contact area (64) being secured laterally against lateral movements by securing flanks (59a, 59b) of the tool carrier (40).

11. Tool-changing system (10) according to one of the preceding claims,
**characterized in that** the tension lever (60) has a locking section (62) which can be inserted into a lever receiving recess (22b) of the soil-working tool (20).

12. Agricultural soil-working machine, with
- a tool-changing system (10),
**characterized in that** the tool-changing system (10) is designed according to one of the preceding claims.

13. Method for fastening a soil-working tool (20) to a tool carrier (40) by means of a tension lever (60) and a locking member (80), comprising the steps of:
- arranging the soil-working tool (20) on a tool intake area of the tool carrier (40);
- inserting the tension lever (60) into a receiving recess (22b) of the soil-working tool (20), so that the tension lever (60) extends at least in sections to the rear of the tool carrier (40);
- bringing the tension lever (60) into an operational tension state by pressing the tension lever (60) in the direction of the tool carrier (40), the tension lever (60) undergoing elastic deformation when it is brought into the operational tension state and the tension lever (60) tenses the soil-working tool (20) to the tool carrier (40) in the operational tension state in an operationally reliable manner; and
- bringing the locking member (80) into a locking position by moving the locking member (80) relative to the tool carrier (40), wherein the tension lever (60) is locked in the operational tension state by the locking member (80) being in the locking position;
wherein the locking member (80) is inserted into a locking member intake (50) when it is moved into the locking position, and the locking member intake (50) has a securing stop (56) for receiving a restoring force transmitted to the locking member (80) by the tension lever (60) which is in the operational tension state,
**characterized in that** the locking member (80) is subjected to pressure in the locking position by the tension lever (60) which is in the operational tension state.

14. Method according to claim 13,
**characterized in that** the soil-working tool (20), the tool carrier (40), the tension lever (60) and the locking member (80) form a tool-changing system (10) according to one of claims 1 to 11.

## Revendications

1. Système de changement d'outil (10) pour un appareil agricole de travail du sol, comprenant
- un outil de travail du sol (20),
- un porte-outil (40) destiné à porter l'outil de travail du sol (20),
- un levier de serrage (60) qui peut être transféré par déformation élastique dans un état de fonctionnement de serrage, dans lequel ledit levier de serrage (60) s'étend au moins par sections sur la face arrière du porte-outil, et dans lequel ledit levier de serrage (60) serre l'outil de travail du sol (20) de manière sûre en fonctionnement sur le porte-outil (40), et
- un élément de blocage (80) qui est mobile par rapport au porte-outil (40) et qui est destiné à bloquer, dans une position de blocage, le levier de serrage (60) dans l'état de fonctionnement de serrage,
le porte-outil (40) comprenant un logement de réception d'organe de blocage (50) destiné à recevoir ledit organe de blocage (80), et ledit logement de réception d'organe de blocage (50) présentant une butée de sécurité (56) pour recevoir une force de rappel transmise à l'organe de blocage (80) par le levier de serrage (60) se trouvant dans l'état de fonctionnement de serrage, **caractérisé en ce que** la butée de sécurité (56) est agencée, lorsque le levier de serrage (60) est en état de fonctionnement de serrage, sur la face arrière du levier de serrage (60).

2. Système de changement d'outil (10) selon la revendication 1,
**caractérisé en ce que** le logement de réception d'organe de blocage (50) est formé par une cavité de blocage (54) dans le porte-outil (40), notamment dans un prolongement de matériau (52) sur la face arrière du porte-outil.

3. Système de changement d'outil (10) selon la revendication 2,
**caractérisé en ce que** la cavité de blocage (54) formant le logement de réception d'organe de blocage (50) dans le porte-outil (40) est conçue sous la forme d'un trou traversant s'étirant dans le sens transversal.

4. Système de changement d'outil (10) selon l'une quelconque des revendications précédentes,
**caractérisé en ce que** le porte-outil (40) comprend un corps porteur en forme de tige (46) doté d'une surface d'extrémité (58) ou arête d'extrémité s'étendant verticalement au moins par sections, la butée de sécurité (56) étant formée par une surface de butée ou arête de butée s'étendant parallèlement et/ou décalée vers l'arrière par rapport à la surface d'extrémité (58) ou arête d'extrémité.

5. Système de changement d'outil (10) selon l'une quelconque des revendications précédentes,
**caractérisé en ce que** l'organe de blocage (80) présente un évidement latéral de matériau (86) destiné à recevoir une section de matériau portant la butée de sécurité (56) pendant que l'organe de blocage (80) est placé dans le logement de réception de l'organe de blocage (50).

6. Système de changement d'outil (10) selon la revendication 5,
**caractérisé en ce que** l'organe de blocage (80) présente à l'arrière de l'évidement de matériau (86) une zone d'appréhension (88) pour qu'un opérateur puisse tenir l'organe de blocage (80).

7. Système de changement d'outil (10) selon l'une quelconque des revendications précédentes,
**caractérisé en ce que** l'organe de blocage (80) présente un contour de contact (82) frontal dont la forme est adaptée au contour du levier de serrage (60).

8. Système de changement d'outil (10) selon l'une quelconque des revendications précédentes,
**caractérisé en ce que** le levier de serrage (60) est conçu sous forme de bride à ressort, notamment de pièce en fil métallique pliée.

9. Système de changement d'outil (10) selon l'une quelconque des revendications précédentes,
**caractérisé en ce que** le levier de serrage (60) entoure, dans une zone supérieure (66), un espace libre (68) à travers duquel s'étend le logement de réception de l'organe de blocage (50) lorsque le levier de serrage (60) est en état de fonctionnement de serrage.

10. Système de changement d'outil (10) selon l'une quelconque des revendications précédentes,
**caractérisé en ce que** le levier de serrage (60) présente une zone de contact avec le porteur (64) qui est pressée contre une zone de conduite de levier (48) du porte-outil (40) lorsque le levier de serrage (60) est en état de fonctionnement de serrage, ledit levier de serrage (60) étant, dans la zone de contact avec le porteur (64), sécurisé latéralement par des flancs de sécurité (59a, 59b) du porte-outil (40) pour empêcher des mouvements latéraux.

11. Système de changement d'outil (10) selon l'une quelconque des revendications précédentes,
**caractérisé en ce que** le levier de serrage (60) présente une section de verrouillage (62) qui peut être placée dans une cavité de logement du levier (22b) de l'outil de travail du sol (20).

12. Appareil agricole de travail du sol, comprenant
- un système de changement d'outil (10),
**caractérisé en ce que** ledit système de changement d'outil (10) est réalisé selon l'une quelconque des revendications précédentes.

13. Procédé de fixation d'un outil de travail du sol (20) sur un porte-outil (40) au moyen d'un levier de serrage (60) et d'un organe de blocage (80), comprenant les étapes :
- agencement de l'outil de travail du sol (20) dans une zone de logement de réception d'outil du porte-outil (40),
- mise en place du levier de serrage (60) dans une cavité de réception (22b) de l'outil de travail du sol (20), de telle sorte que le levier de serrage (60) s'étend au moins par sections sur la face arrière du porte-outil (40),
- transfert du levier de serrage (60) dans un état de fonctionnement de serrage en appuyant sur le levier de serrage (60) en direction du porte-outil (40), le levier de serrage (60) étant soumis, lors du transfert dans l'état de fonctionnement de serrage, à une transformation élastique, et le levier de serrage (60) serrant l'outil de travail du sol (20), à l'état de fonctionnement de serrage, de manière sûre sur le porte-outil (40), et
- transfert de l'organe de blocage (80) dans une position de blocage en déplaçant l'organe de blocage (80) par rapport au porte-outil (40), le levier de serrage (60) étant bloqué par l'organe de blocage (80), qui se trouve en position de blocage, à l'état de fonctionnement de serrage,
l'organe de blocage (80) étant, au moment ou il est mis en position de blocage, placé dans un logement de réception d'organe de blocage (50), et ledit logement de réception d'organe de blocage (50) présentant une butée de sécurité (56) pour recevoir une force de rappel transmise à l'organe de blocage (80) par le levier de serrage (60) se trouvant dans l'état de fonctionnement de serrage,
**caractérisé en ce que** l'organe de blocage (80) est sollicité en pression dans la position de blocage par le levier de serrage (60) se trouvant dans l'état de fonctionnement de serrage.

14. Procédé selon la revendication 13,
**caractérisé en ce que** l'outil de travail du sol (20), le porte-outil (40), le levier de serrage (60) et l'organe de blocage (80) forment un système de changement d'outil (10) selon l'une quelconque des revendications 1 à 11.
